# EUROPEAN PATENT SPECIFICATION

(11) **EP 0 651 546 B1**
(45) Date of publication and mention of the grant of the patent: **01.03.2000**
(21) Application number: 94307890.7
(22) Date of filing: 27.10.1994
(51) Int. Cl.: H04M 1/02

(54) **Cellular radio telephone set**
Zellulares Funktelefon
Radiotéléphone cellulaire

(30) Priority: 29.10.1993 JP 29396093
(43) Date of publication of application: 03.05.1995
(73) Proprietor: NEC CORPORATION, Tokyo (JP)
(72) Inventor: Nagai, Michio, Minato-ku, Tokyo (JP)
(74) Representative: Moir, Michael Christopher

(56) References cited:
- EP-A- 0 283 853
- WO-A-93/07680
- DE-A- 3 323 858
- PATENT ABSTRACTS OF JAPAN vol. 17, no. 134 (E-1334) 19 March 1993 & JP-A-04 306 036 (MATSUSHITA ELECTRIC IND.)

## Description

### BACKGROUND OF THE INVENTION

### 1. FIELD OF THE INVENTION

The present invention relates to a cellular radio telephone set and, more particularly, to a cellular radio telephone set suitable for use with either the left hand or the right hand of a user as in a case wherein the telephone set is used in an automobile.

### 2. DESCRIPTION OF THE PRIOR ART

Telephone sets of a portable type can perform speech communication by using radio waves currently include cellular radio telephone sets and mobile radio telephone sets. These telephone sets slightly differ in arrangement depending on the purpose of use and the like.

More specifically, a cellular radio telephone set has receiver and transmitter sections arranged on the same surface on which an operation portion is arranged. With this arrangement, after the user operates the operation portion with one hand while holding the cellular radio telephone set with the other hand, he/she can perform speech communication without changing his/her hand holding the telephone set.

In contrast to this, a mobile radio telephone has receiver and transmitter portions arranged on the opposite surface to the surface on which an operating portion is arranged. With this arrangement, after the user performs a dial input operation through the operating portion while the mobile radio telephone set is held on a holder with the operation portion facing upward, he/she can pick up the mobile radio telephone set and perform speech communication without changing his/her hand holding the telephone set.

By receiver and transmitter portions we mean the portions in which a loudspeaker and a microphone respectively are located. Receiving and transmitting circuitry may or may not be respectively co-located with the loudspeaker and microphone.

In general, since the subscription contract charges are high, users seldom have both a cellular radio telephone set and a mobile radio telephone set. The holder of a cellular radio telephone set also uses it in an automobile.

When a cellular radio telephone is to be used in an automobile, the user must use both his/her hands to perform a dial input operation. Such an operation is dangerous during driving.

Another type of cellular radio telephone set is mounted on a holder with an operating portion arranged on the transmitter/receiver portion side facing upward to allow a dial input operation with one hand in an automobile. According to the cellular radio telephone having this arrangement, however, the user must change his/her hand holding the cellular radio telephone set after he/she performs a dial input operation and picks up the cellular radio telephone set. In changing the hand, the user may drop the cellular radio telephone.

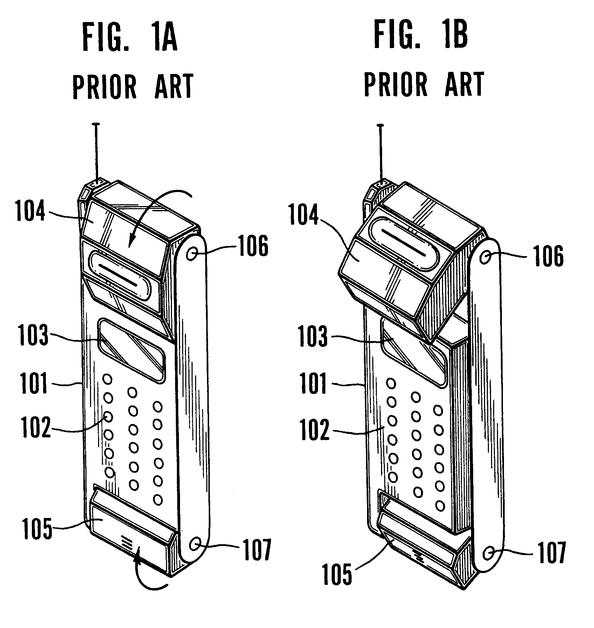

In order to solve such a problem, a cellular radio telephone set is disclosed in Japanese Patent Laid-Open No. 4-306036. As shown in Figs. 1A and 1B, this cellular radio telephone set has a receiver portion 104 and a transmitter portion 105 which can be fixed in positions suitable for speech communication after the receiver and transmitter portions are pivoted to the same or opposite side as or to an operating portion 102 and a display portion 103 of a main body 101.

With this arrangement, in an automobile, if the cellular radio telephone set is mounted on a special holder, in advance, with the receiver and transmitter portions 104 and 105 facing the opposite side to the operating portion 102, the user can perform speech communication, without changing his/her hand holding the telephone set, after he/she performs a dial input operation and picks up the telephone set.

In the cellular radio telephone set disclosed in Japanese Patent Laid-Open No. 4-306036, the receiver and transmitter portions 104 and 105 are rotatably mounted on the front and lower portions of the main body 101. With this arrangement, a sufficient distance can be ensured between the receiver portion 104 and the transmitter portion 105 when the cellular radio telephone set is used as a mobile radio telephone set, whereas the overall telephone set can be reduced in size when it is used as a cellular radio telephone set.

Although the cellular radio telephone set disclosed in Japanese Patent Laid-Open No. 4-306036 becomes slightly smaller in size when it is used as a cellular radio telephone set than when it is used as a mobile radio telephone set, the telephone set has a length almost equal to the distance between the ear and mouth of an average user. Therefore, this telephone set is large as compared with other cellular radio telephone sets.

In order to reduce the size of the telephone set used as a cellular radio telephone set while maintaining the distance between the receiver portion 104 and the transmitter portion 105 of the telephone set as a mobile radio telephone set, the receiver and transmitter portions 104 and 105 may be increased in length, and the main body 101 (the operating portion 102 and the display portion 103) may be decreased in length. If, a reduction in size is achieved by such means, the area of the operating portion 102 decreases, resulting in poor operability.

In addition, when such a cellular radio telephone set is to be used in an automobile, the receiver and transmitter portions 104 and 105 must be pivoted to the opposite side to the operating portion 102 in advance, requiring a cumbersome operation.

EP 0,283,853 describes a telephone system in which microphone holes and speaker holes for "off-hook talking" are opened on a rear surface of a handset. In addition, microphone holes and speaker holes are also opened on a front surface of the handset.

WO 93/07680 describes a radio unit including a housing having first and second portions. A speaker is disposed in one of the portions and a microphone is disposed in the other portion. The portions are movable between first and second relative positions with one of the positions providing a handset configuration and the other providing a speaker-microphone configuration.

DE 3,323,858 describes a radio unit in which a loudspeaker portion and a microphone portion are hinged to a main body portion.

### SUMMARY OF THE INVENTION

The present invention at least in its preferred embodiments provides a cellular radio telephone set which can provide operability as high as that of a mobile radio telephone set without requiring any cumbersome operation, and allows a reduction in th e size of the telephone set, when it is used as a cellular radio telephone set, while ensuring a sufficient distance between receiver and transmitter portions in terms of human engineering without lowering the operability.

The present invention provides a cellular radio telephone set comprising a casing having a loudspeaker section with loudspeaker means and a microphone section with microphone means, each section having front and rear surfaces, the loudspeaker means being audible by the user with either the front or rear surface of the loudspeaker section facing towards the user, and the microphone means being addressable by the user with either the front or the rear surface of the microphone section facing towards the user, characterised in that a notched portion is formed on one side of the loudspeaker section and the microphone section is formed to have the same shape as that of the notched portion so that the microphone section can be folded and housed in the notched portion.

The loudspeaker section may comprise sound holes formed in both front and rear surfaces thereof, and the microphone section may comprise sound holes formed in both front and rear surfaces thereof.

Sound holes of the microphone section may be formed near upper and lower end portions of the microphone section.

A receiver volume adjustment button may be arranged on a side surface of the loudspeaker section.

According to the cellular radio telephone having the above arrangement, the sound holes of each of the receiver and transmitter portions are formed on the front and rear surfaces of the housing. Therefore, when the telephone set is mounted on a holder with the surface (front surface) on the operating portion side facing upward, operability as high as that of a mobile radio telephone can be obtained.

If the cellular radio telephone set is designed to be foldable, the size of the telephone set can be reduced without reducing the operating portion. Therefore, a sufficient distance in terms of human engineering can be ensured between the receiver and transmitter portions.

The above and many other advantages, features and additional objects of the present invention will become manifest to those versed in the art upon making reference to the following detailed description and accompanying drawings in which preferred structural embodiments incorporating the principles of the present invention are shown by way of illustrative example.

### BRIEF DESCRIPTION OF THE DRAWINGS

In the accompanying drawings:
Fig. 1A is a schematic perspective view showing a conventional cellular radio telephone set in a carried state;
Fig. 1B is a schematic perspective view showing pivoted states of the receiver and transmitter portions of the conventional cellular radio telephone set;
Fig. 2A is a schematic front view showing a cellular radio telephone set according to an embodiment of the present invention;
Fig. 2B is a sectional view taken along a line B - B in Fig. 2A;
Figs. 2C and 2D are schematic right side and rear views showing the embodiment shown in Fig. 2A; and
Figs. 3A and 3B are schematic side views showing a state wherein the second housing of the embodiment shown in Figs. 2A to 2D is open.

### DETAILED DESCRIPTION OF THE PREFERRED EMBODIMENTS

A cellular radio telephone set according to an embodiment of the present invention will be described below with reference to the accompanying drawings.

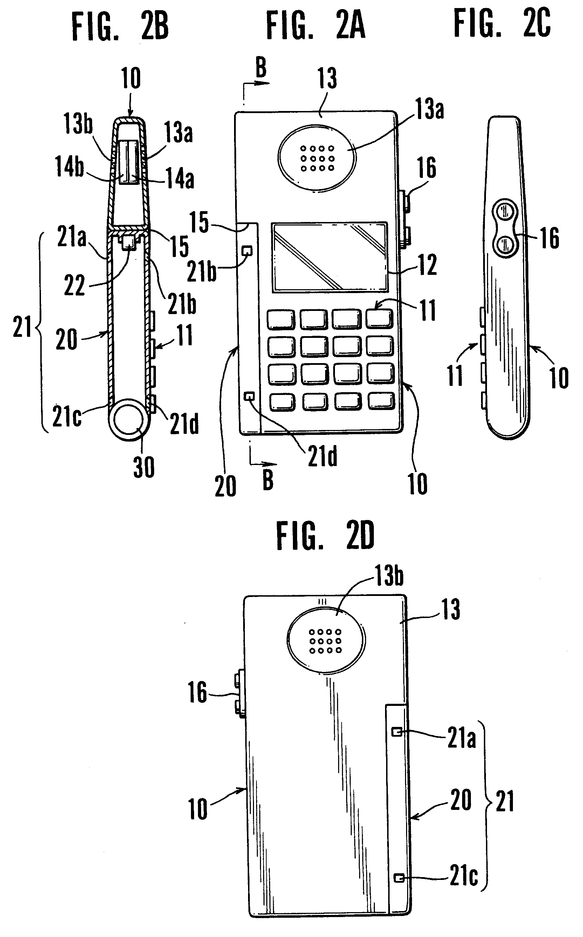

Figs. 2A to 2D show a cellular radio telephone set according to this embodiment. Fig. 2A is a schematic front view of the telephone set. Fig. 2B is a sectional view taken along a line B - B in Fig. 2A. Fig. 2C is a schematic right side view of the telephone set. Fig. 2D is a schematic rear view of the telephone set.

Referring to Figs. 2A to 2D, reference numeral 10 denotes a first housing. An operating portion 11 constituted by a plurality of push buttons is arranged on a lower portion of the front surface of the first housing 10. A display portion 12 for displaying dial input numbers and the like is arranged on a middle portion of the first housing 10.

An upper portion of the first housing 10 is a receiver portion 13 having sound holes 13a and 13b formed in its front and rear surfaces. Low-profile speakers 14a and 14b are incorporated in the first housing 10 at positions corresponding to the sound holes 13a and 13b. The speakers 14a and 14b generate received sounds through sound holes 13a and 13b. In this embodiment, the two low-profile speakers 14a and 14b are stacked on each other with their diaphragms facing outward.

As a speaker arrangement for generating received sounds to opposite sides, an arrangement constituted by two speakers arranged side by side or an arrangement constituted by one speaker having diaphragms in the front and rear surfaces may also be used.

An elongated notched portion 15 is formed on the left side of the first housing 10. The notched portion 15 serves as a storing portion for a second housing 20 (to be described later).

A receiver volume adjustment button 16 is arranged near a middle portion of the right side surface of the first housing 10.

The second housing 20 has the same elongated shape as that of the notched portion 15 of the first housing 10. The second housing 20 is joined to the lower end of the notched portion 15 via a hinge 30 to be collapsible.

When the second housing 20 is folded, it is housed in the notched portion 15 of the first housing 10 to become integral with the first housing 10. As a result, the overall cellular radio telephone set becomes rectangular.

The second housing 20 serves as a transmitter portion 21. Sound holes 21a and 21b are formed in the front and rear surfaces of the second housing 20 at positions near the upper end portion (on the opposite side to the hinge 30). In addition, sound holes 21c and 21d are formed in the front and rear surfaces of the second housing 20 at positions near the lower end portion (hinge 30).

A microphone 22 for receiving the voice of the user via the sound holes 21a to 21d and outputting signals is incorporated in the upper end portion of the second housing 20.

The microphone 22 is connected to a speech processing circuit (not shown) incorporated in the first housing 10 via a wire 22a extending through the hinge 30. The microphone 22 is operated when the cellular radio telephone set is set in a speech mode through the operating portion 11.

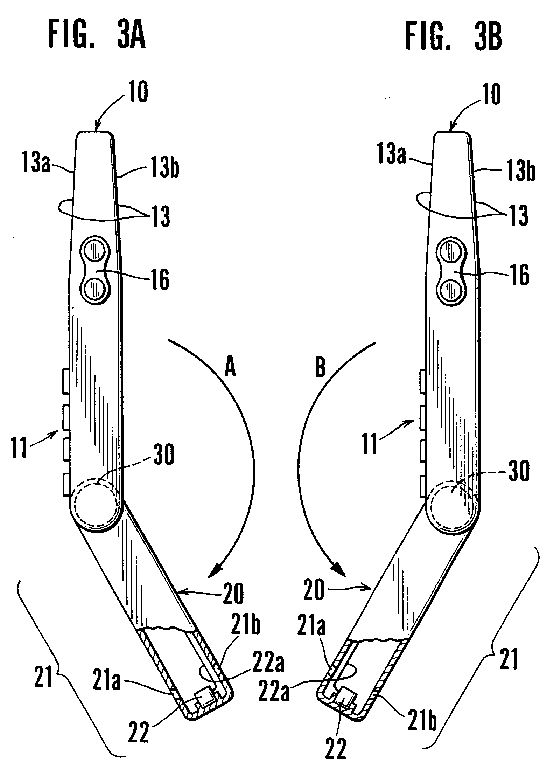

According to the cellular radio telephone set of this embodiment having the above arrangement, operability as high as that of a mobile radio telephone set can be obtained by only opening the second housing 20 in the direction indicated by an arrow A in Fig. 3A, and placing the telephone set on a special holder installed in a vehicle with the operating portion 11 facing upward. In addition, this telephone set can be used in the same manner as a general cellular ratio telephone by opening the second housing 20 in the direction indicated by an arrow B in Fig. 3B.

According to the cellular radio telephone set of this embodiment, since the second housing 20 is housed in the left side of the first housing 10 when the telephone set is used as a cellular radio telephone set, the size of the telephone set can be reduced without degrading its operability. In this case, since the length of the second housing 20 can be maximized to be equal to the length of a side of the first housing 10, a sufficient distance in terms of human engineering can be ensured between the receiver portion 13 and the transmitter portion 21 while a reduction in size is achieved.

In the cellular radio telephone set of this embodiment, the sound holes 21c and 21d of the transmitter portion 21 are also formed near the hinge 30. Therefore, speech communication can be performed while the second housing 20 is housed in the notched portion 15 (see Figs. 2A, 2B, and 2D).

In addition, the receiver volume adjustment button 16 is arranged on a side surface of the first housing 10. Therefore, the user can depress the receiver volume adjustment button 16 with the thumb of a hand which holds the telephone set either when the cellular radio telephone set is held in the left hand in the state shown in Fig. 3A or when the telephone set. is held in the right hand in the state shown in Fig. 3B.

The cellular radio telephone set of the present invention is not limited to the above embodiment.

For example, the above embodiment includes the receiver volume adjustment button 16 and sound holes 21c and 21d of the transmitter portion 21 which are formed near the hinge 30 of the second housing 20. However, they may be omitted as needed.

## Claims

1. A cellular radio telephone set comprising a casing (10) having a loudspeaker section (13) with loudspeaker means (14a, 14b) and a microphone section (20) with microphone means (22), each section having front and rear surfaces, the loudspeaker means being audible by the user with either the front or rear surface of the loudspeaker section facing towards the user, and the microphone means being addressable by the user with either the front or the rear surface of the microphone section facing towards the user, characterised in that a notched portion (15) is formed on one side of the loudspeaker section (10) and the microphone section (20) is formed to have the same shape as that of the notched portion so that the microphone section can be folded and housed in the notched portion.

2. A telephone set according to Claim 1, further comprising a receiver volume adjustment button (16) arranged on a side surface of said loudspeaker section (13).

3. A telephone set according to Claim 1 or 2, whereas the loudspeaker section comprises sound holes (13a, 13b), formed in both front and rear surfaces thereof, and the microphone section comprises sound holes (21a to 21d) formed in both front and rear surfaces thereof.

4. A telephone set according to Claim 3, wherein said sound holes of said microphone section are formed near upper and lower end portions of said microphone section.

## Patentansprüche

1. Zellularfunktelefonapparat, der ein Gehäuse (10) aufweist, das einen Lautsprecherabschnitt (13) mit Lautsprechermitteln (14a, 14b) und einen Mikrophonabschnitt (20) mit Mikrophonmitteln (22) besitzt, wobei jeder Abschnitt vordere und hintere Oberflächen hat, die Lautsprechermittel durch den Benutzer hörbar sind, wobei entweder die vordere oder die hintere Oberfläche des Lautsprecherabschnitts zum Benutzer gerichtet ist, und die Mikrophonmittel durch den Benutzer ansprechbar sind, wobei entweder die vordere oder die hintere Oberfläche des Mikrophonabschnitts zum Benutzer gerichtet sind, dadurch gekennzeichnet, daß ein Aussparungsbereich (15) auf einer Seite des Lautsprecherabschnitts (10) ausgebildet ist und der Mikrophonabschnitt (20) so ausgebildet ist, daß er dieselbe Form wie der Aussparungsbereich hat, so daß der Mikrophonabschnitt geklappt und im Aussparungsbereich untergebracht werden kann.

2. Telefonapparat nach Anspruch 1, der weiter einen Empfängerlautstärkeeinstellknopf (16) aufweist, der auf einer Seitenoberfläche des Lautsprecherabschnitts (13) angeordnet ist.

3. Telefonapparat nach Anspruch 1 oder 2, wobei der Lautsprecherabschnitt Schallöffnungen (13a, 13b) aufweist, die sowohl in seiner vorderen als auch hinteren Oberfläche ausgebildet sind, und der Mikrophonabschnitt Schallöcher (21a bis 21d) aufweist, die sowohl in seiner vorderen als auch seiner hinteren Oberfläche ausgebildet sind.

4. Telefonapparat nach Anspruch 3, bei dem Schallöcher des Mikrophonabschnitts nahe den oberen und unteren Endbereichen des Mikrophonabschnitts ausgebildet sind.

## Revendications

1. Radiotéléphone cellulaire comprenant un boîtier (10) comportant une section de haut-parleur (13) à moyens de haut-parleur (14a, 14b) et une section de microphone (20) à moyens de microphone (22), chaque section ayant des surfaces avant et arrière, les moyens de haut-parleur étant audibles par l'utilisateur en ayant la surface avant ou arrière de la section de haut-parleur orientée vers l'utilisateur, et les moyens de microphone étant adressables par l'utilisateur en ayant la surface avant ou arrière de la section de microphone orientée vers l'utilisateur, caractérisé en ce qu'une partie échancrée (15) est formée sur un côté de la section de haut-parleur (10) et la section de microphone (20) est réalisée pour qu'elle ait la même forme que celle de la partie échancrée de sorte que la section de microphone puisse être repliée et logée dans la partie échancrée.

2. Radiotéléphone selon la revendication 1, comprenant en outre un bouton de réglage de volume de récepteur (16) disposé sur une surface latérale de ladite section de haut-parleur (13).

3. Radiotéléphone selon la revendication 1 ou 2, dans lequel la section de haut-parleur comprend des trous acoustiques (13a, 13b), formés dans ses deux surfaces avant et arrière, et la section de microphone comprend des trous acoustiques (21a à 21d) formés dans ses deux surfaces avant et arrière.

4. Radiotéléphone selon la revendication 3, dans lequel lesdits trous acoustiques de ladite section de microphone sont formés prés d'extrémités supérieure et inférieure de ladite section de microphone.
